(19) **Europäisches Patentamt / European Patent Office / Office européen des brevets**

(11) **EP 2 436 792 B1**

(12) **EUROPEAN PATENT SPECIFICATION**

(45) Date of publication and mention
of the grant of the patent:
**16.10.2019 Bulletin 2019/42**

(51) Int Cl.:
**C22C 23/06** (2006.01)  **C22C 23/00** (2006.01)
**C22C 23/02** (2006.01)  **C22C 23/04** (2006.01)
**C22F 1/00** (2006.01)  **C22F 1/06** (2006.01)

(21) Application number: **10780449.4**

(22) Date of filing: **18.05.2010**

(86) International application number:
**PCT/JP2010/058377**

(87) International publication number:
**WO 2010/137494 (02.12.2010 Gazette 2010/48)**

(54) **LINEAR OBJECT, BOLT, NUT AND WASHER EACH COMPRISING MAGNESIUM ALLOY**

LINEARES OBJEKT, BOLZEN, MUTTER UND UNTERLEGSCHEIBE MIT EINER MAGNESIUMLEGIERUNG

OBJET LINÉAIRE, BOULON, ÉCROU ET RONDELLE COMPRENANT CHACUN UN ALLIAGE DE MAGNÉSIUM

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.05.2009 JP 2009131550**
**08.03.2010 JP 2010050940**

(43) Date of publication of application:
**04.04.2012 Bulletin 2012/14**

(73) Proprietor: **Sumitomo Electric Industries, Ltd.**
**Chuo-ku**
**Osaka-shi**
**Osaka 541-0041 (JP)**

(72) Inventors:
• **KUWABARA, Tetsuya**
**Osaka-shi**
**Osaka 554-0024 (JP)**
• **NISHIKAWA, Taichirou**
**Osaka-shi**
**Osaka 554-0024 (JP)**
• **NAKAI, Yoshihiro**
**Osaka-shi**
**Osaka 554-0024 (JP)**
• **TANJI, Toru**
**Osaka-shi**
**Osaka 554-0024 (JP)**
• **KUSAKARI, Misato**
**Osaka-shi**
**Osaka 554-0024 (JP)**

(74) Representative: **Boult Wade Tennant LLP**
**5th Floor, Salisbury Square House**
**8, Salisbury Square**
**London EC4Y 8AP (GB)**

(56) References cited:
GB-A- 2 095 288    JP-A- 8 027 533
JP-A- 57 210 946    JP-A- 2001 269 746
JP-A- 2003 129 160    JP-A- 2005 180 599
US-A- 4 401 621    US-A1- 2009 081 313

• MORGAN J E ET AL: "AN INVESTIGATION INTO CREEP-RESISTANT, AS-CAST MAGNESIUM ALLOYS CONTAINING YTTRIUM, ZINC, NEODYMIUM AND ZIRCONIUM", METALLURGICAL TRANSACTIONS A. PHYSICAL METALLURGY AND MATERIALSSCIENCE, METALLURGICAL SOCIETY OF AIME. NEW YORK, US, vol. 12A, no. 9, 1 September 1981 (1981-09-01), pages 1581-1585, XP009040769,
• Shintaro Yoshimoto ET AL: "Microstructure and Mechanical Properties of Extruded Mg-Zn-Y Alloys with 14H Long Period Ordered Structure", Materials Transactions, vol. 47, no. 4, 1 January 2006 (2006-01-01), pages 959-965, XP055330667, JP ISSN: 1345-9678, DOI: 10.2320/matertrans.47.959

EP 2 436 792 B1

**Description**

Technical Field

The present invention relates to a linear object comprising magnesium-alloy having not only excellent heat resistance but also excellent plastic formability, in particular, to a linear object comprising magnesium-alloy suitably used as a material for fastening components, such as bolts, nuts, and washers.

Background Art

Magnesium alloys are lighter than aluminum and have specific strength and specific rigidity superior to steel and aluminum. So, the use of magnesium alloys for aircraft components, vehicle components, housings for electric appliances, and so forth has been studied (see PTL 1).

For example, PTL 1 describes a magnesium alloy (expressed as the symbol EZ (EZ33) specified by the American Society for Testing and Materials (ASTM)) containing a rare-earth element having excellent heat resistance in a amount of 5.0% by mass or less. PTL 1 also states that a magnesium-alloy wire (linear object) formed by drawing is subjected to screw working (plastic working), such as forge processing and thread rolling, to produce a screw.

Meanwhile, in the case where magnesium-alloy members are fastened with a fastening component, a fastening component composed of a magnesium alloy is preferably used in order to overcome the problem of electrolytic corrosion. In the case where magnesium-alloy members are fastened with a fastening component composed of another material, the fastening component (for example, a bolt) can be loosened in a high-temperature environment because of a difference in the amount of thermal expansion. Thus, also from this point of view, a fastening component composed of a magnesium alloy having substantially the same thermal expansion coefficient is preferably used.

Furthermore, magnesium alloys are electrochemically base metals and corrode easily, i.e., disadvantageously have poor corrosion resistance. So, in the case of using a fastening component composed of a magnesium alloy, a surface of the component is preferably subjected to coating to improve corrosion resistance. For example, PTL 2 describes a coating technique for subjecting an electrically conducting body (in particular, a metallic workpiece) to inorganic coating.

Citation List

Patent Literature

PTL 1: Japanese Unexamined Patent Application Publication No. 2005-48278
PTL 2: PCT Japanese Translation Patent Publication No. 2001-503478

US 2009/0081313 A1 relates to biodegradable magnesium alloys and uses thereof.
GB2095288 A relates to magnesium alloys.
US 4,401,621 relates to magnesium alloys.

Summary of Invention

Technical Problem

However, traditional magnesium alloys do not sufficiently achieve a good balance between the heat resistance and the plastic formability.

It is assumed that a product including magnesium-alloy members fastened with a magnesium-alloy component is used in a high-temperature environment. Meanwhile, magnesium alloys have extremely poor plastic formability. It is thus necessary to heat a magnesium alloy to a temperature at which plastic formability is increased and to perform hot working. So, while improvement in the heat resistance of a magnesium alloy is one of the important issues, the improvement in heat resistance results in a reduction in plastic formability. Thus, for example, a linear object comprising magnesium-alloy used as a material for fastening components is required to achieve a high-level balance between the heat resistance and the plastic formability.

The present invention has been made in light of the circumstances described above. It is an object of the present invention to provide a linear object comprising magnesium-alloy having not only excellent heat resistance but also excellent plastic formability. It is another object of the present invention to provide a bolt, a nut, and a washer produced by subjecting the linear object comprising magnesium-alloy to plastic working. Solution to Problem

The present invention provides a linear object comprising magnesium alloy according to claim 1. The object exhibits excellent heat reisistance and plastic formability.

A linear object comprising magnesium-alloy according to the present invention is composed of a magnesium alloy having the foregoing composition, in which the linear object comprising magnesium-alloy has a creep strain of 1.0% or less, the creep strain being determined by a creep test at a temperature of 150°C and a stress of 75 MPa for 100 hours.

The linear object comprising magnesium-alloy according to the present invention has the foregoing composition and a creep strain of 1.0% or less, which indicates satisfactory creep properties, the creep strain being determined by the foregoing creep test. The creep strain is preferably 0.2% or less and particularly preferably 0.1% or less.

Y improves heat resistance and creep properties. A Y content of less than 0.1% by mass results in a reduction in creep properties. A Y content exceeding 6% by mass results in a reduction in plastic formability. The Y content is 5.2% by mass. Even at the relatively low Y content, it should be possible to achieve a high-level balance between the heat resistance and the plastic formability.

In addition to Y, the incorporation of Zn Zr, and Nd improves mechanical properties, castability, corrosion resistance, and other properties. The proportions of the elements are limited to the values indicated in claim 1, so that the plastic formability is not reduced. The Zn content is 0.1% by mass. Also in this case, it is possible to achieve a high-level balance between the heat resistance and plastic formability.

Note that the term "linear object" used here indicates an object having a diameter $\phi$ (if the object has a polygonal cross section, the circle-equivalent diameter of a circle having an area equal to the polygonal cross section is used) of 13 mm or less and a length 100 or more times the diameter $\phi$. The linear object comprising magnesium-alloy includes long or fixed-length bars, wire rods, pipes, and sections with predetermined sectional shapes and dimensions. The linear object comprising magnesium-alloy may be produced as described below. For example, a magnesium alloy is melted and then poured into a mold having a predetermined shape. Alternatively, a cast material having any shape is subjected to rolling, extrusion, or drawing. Particularly preferably, the linear object comprising magnesium-alloy is ultimately produced by drawing. Any of cast materials, rolled materials, and extruded materials may be used as a material to be subjected to drawing.

The linear object comprising magnesium-alloy according to the present invention preferably has a 0.2% proof stress of 200 MPa or more and a tensile strength of 260 MPa or more. Alternatively, the linear object comprising magnesium-alloy preferably has an elongation of 4% or more. More preferably, all the 0.2% proof stress, the tensile strength, and the elongation satisfy the ranges described above.

A 0.2% proof stress of 200 MPa or more and a tensile strength of 260 MPa or more result in excellent strength. So, for example, if the linear object comprising magnesium-alloy is subjected to plastic working to form a bolt, the bolt has high strength (axial force). Furthermore, an elongation of 4% or more results in excellent plastic formability. The 0.2% proof stress is preferably 230 MPa or more and particularly preferably 250 MPa or more. The tensile strength is preferably 280 MPa or more and particularly preferably 300 MPa or more. The elongation is preferably 5% or more and particularly preferably 6% or more.

The linear object comprising magnesium-alloy according to the present invention has not only excellent heat resistance but also excellent plastic formability and thus is easily formed into a secondary product by plastic working. Examples of the plastic working include extrusion, drawing, forge processing, thread rolling, cold heading, rolling, press forming, bending work, and drawing. These workings may be used alone or in combination. Examples of the secondary products include fastening components, such as bolts, nuts, and washers, shafts, pins, rivets, gears, sheets, pressed materials, aircraft components, vehicle components, and components and housings for electric appliances.

A bolt according to the present invention is produced by subjecting the linear object comprising magnesium-alloy according to the present invention to plastic working. For example, the bolt is produced by cutting a linear object comprising magnesium-alloy into a piece having predetermined dimensions and subjecting the piece to forge processing to form a head portion and thread rolling to form a thread on its shank. The bolt according to the present invention is produced by processing the linear object comprising magnesium-alloy having excellent heat resistance. Thus, even when the bolt is used in a high-temperature environment, a reduction in bolt axial force is small.

A nut according to the present invention is produced by subjecting the linear object comprising magnesium-alloy according to the present invention to plastic working. For example, the nut is produced by cutting a linear object comprising magnesium-alloy into a piece having predetermined dimensions, placing the piece in a mold, performing cold heading to form a predetermined shape by applying a pressure while a hole is being formed, and then cutting a thread in the hole.

A washer according to the present invention is produced by subjecting the linear object comprising magnesium-alloy according to the present invention to plastic working. For example, the washer is produced by cutting a linear object comprising magnesium-alloy into a piece having predetermined dimensions and subjecting the piece to press forming and cold heading.

In the case where the bolt and the nut according to the present invention, or the bolt, the nut, and the washer according to the present invention are combined to form a fastening structure, problems of electrolytic corrosion and a difference in thermal expansion between the fastening components are eliminated.

A corrosion protection coating may be formed on a surface of the bolt, the nut, or the washer according to the present invention.

The coating on the surface prevents a corrosive component in an environment from coming into contact with the magnesium alloy, thereby improving the corrosion resistance. In addition to the fastening components, such as the bolt, the nut, and the washer, a corrosion protection coating may be formed on a surface of a shaft, a pin, a rivet, a gear, a sheet, a pressed material, an aircraft component, a vehicle component, or a component or housing for an electric appliance.

The coating is composed of a material having corrosion resistance against the corrosive component in the environment and has a structure that prevents the entrance of the corrosive component. Inorganic coating agents and organic coating agents may be used for the formation of the coating. In view of heat resistance and durability, an inorganic coating agent is preferably used. For a component, such as a bolt, to which a stress (load) is applied in use, an aid composed of, for example, a ceramic material, a metal, or a resin, may be added to the coating in order to increase the strength of the coating, as needed.

The coating preferably has a thickness of 1 μm or more and less than 20 μm. A thickness of the coating of less than 1 μm makes it difficult to achieve sufficient corrosion resistance. Even if the coating has a thickness of 20 μm or more, the corrosion resistance is not so changed. Rather, a larger thickness of the coating can affect the dimensional accuracy of the component.

A known coating technique may be used to form the coating. An example of the coating agent that can be used is the DELTA series available from Doerken Corp.

In the case where the coating is formed on a surface of a component, such as a bolt, in order to improve the adhesion of the coating, surface treatment, e.g., degreasing treatment, chemical conversion treatment, shot blasting, or sandblasting, may be performed as pretreatment, if necessary. In the case where heat treatment is performed at the time of the formation of the coating, the temperature of the heat treatment is preferably less than 250°C in view of the effect of the crystalline texture of the magnesium alloy. Advantageous Effects of Invention

The linear object comprising magnesium-alloy according to the present invention contains a predetermined amount of Y and has a specific composition and excellent creep properties, thereby achieving not only excellent heat resistance but also excellent plastic formability. Thus, the linear object comprising magnesium-alloy can be used as a material for fastening components, such as bolts, nuts, and washers.

The bolt, the nut, and the washer according to the present invention are produced by subjecting the linear object comprising magnesium-alloy according to the present invention to plastic working and thus have excellent heat resistance.

Description of Embodiments

(Example 1)

Elements were charged into crucibles so as to achieve compositions shown in Table I. The mixtures were melted in an electric furnace and poured into a mold to form billets of magnesium alloys. The crucibles and the molds used were composed of high-purity carbon. Melting and casting were performed in an Ar gas atmosphere. Each of the billets had a cylindrical shape having a diameter ϕ of 80 mm and a height of 90 mm. Next, a surface of each billet was subjected to grinding to reduce the diameter ϕ to 49 mm. Then extrusion was performed to produce a bar having a diameter ϕ of 13 mm.

The working temperature of the extrusion is preferably in the range of 350°C to 450°C. A working temperature of 350°C or higher increases the plastic formability of the magnesium alloy and is less likely to cause cracking during the processing. A working temperature exceeding 450°C causes grain growth during the processing to proceed, thereby increasing the crystal grain size and reducing the plastic formability in the subsequent step, which is not preferred. The extrusion ratio is preferably in the range of 5% to 20%. An extrusion ratio of 5% or more should improve mechanical properties owing to deformation caused by the processing. However, an extrusion ratio exceeding 20% can cause, for example, cracking or breakage during the processing. The cooling rate after the extrusion is preferably 0.1 °C/sec or more. A cooling rate of less than this lower limit causes grain growth to proceed. Here, the extrusion was performed at a working temperature of 385°C, an extrusion ratio of 15%, an extrusion rate of 0.2 mm/sec, and a cooling rate of 1 °C/sec.

[Table I]

| Composition | Y | Zn | Zr | Nd | Al | Mn | Mg |
|---|---|---|---|---|---|---|---|
| *A | 3.0 | 1.1 | --- | --- | --- | --- | Bal. |

(continued)

| Composition | Y | Zn | Zr | Nd | Al | Mn | Mg |
|---|---|---|---|---|---|---|---|
| B | 5.2 | 0.1 | 0.4 | 1.7 | --- | --- | Bal. |
| *C | 7.0 | 2.5 | --- | --- | --- | --- | Bal. |
| *D | --- | 0.9 | --- | --- | 2.8 | 0.1 | Bal. |
| Unit:% by mass<br>*Reference Example not forming part of the present invention. | | | | | | | |

[Processing of Wire]

Each of the resulting magnesium-alloy bars was subjected to drawing to produce a wire rod (wire) having a diameter $\phi$ of 8.9 mm. Each of the wires did not have a defect, such as a crack, in appearance. Each wire had a length 100 or more times the diameter $\phi$.

The working temperature of the drawing is preferably in the range of 100°C to 300°C. A working temperature of 100°C or higher increases the plastic formability of the magnesium alloy and is less likely to cause cracking or breakage during the processing. A working temperature exceeding 300°C causes grain growth during the processing to proceed, thereby increasing the crystal grain size and reducing the plastic formability in the subsequent step, which is not preferred. The working ratio (reduction in area) on the drawing is preferably 5% to 20% per pass. A working ratio of 5% or more and particularly 10% or more should improve mechanical properties owing to deformation caused by the processing. However, a working ratio exceeding 20% can cause, for example, cracking or breakage during the processing. The cooling rate after the drawing is preferably 0.1 °C/sec or more. A cooling rate of less than this lower limit causes grain growth to proceed.

In the case where multiple drawings are performed and where the total working ratio on the basis of the initial wire diameter and the final wire diameter exceeds 20%, an intermediate heat treatment is performed at the time of a total working ratio of 20% or less after the drawing to remove strain due to the processing, thereby inhibiting the occurrence of cracking and breakage in the subsequent drawing. It is thus possible to perform the drawing at a total working ratio exceeding 20%.

The temperature of the heat treatment to remove the strain due to the drawing is preferably in the range of 100°C to 450°C. A temperature of the heat treatment of lower than 100°C does not result in sufficient removal of the strain. A temperature of the heat treatment of 500°C or higher increases the crystal grain size during the heat treatment to reduce the plastic formability in the subsequent step, which is not preferred. Furthermore, heat treatment may be performed not only in the course of the multiple drawings but also after the final drawing. The strength and elongation of the wire can be adjusted by the heat treatment after the final wire diameter is obtained.

Here, the multiple drawings were performed at a working temperature of 250°C (however, 150°C for composition D), a working ratio per pass of 11% to 14%, a drawing rate of 50 mm/sec, and a cooling rate of 1 °C/sec. The total working ratio was 53%. The temperature of the intermediate heat treatment was 450°C (however, 400°C for composition D). The temperature of the final heat treatment was 350°C (however, 400°C for composition D).

[Characterization of Wire]

Test pieces were taken from the resulting magnesium-alloy wires having the foregoing compositions. The test pieces were subjected to a creep test to evaluate the creep properties of the wires. In the creep test, the test pieces were maintained at 150°C for 100 hours while a constant load (stress) of 75 MPa was applied to the test pieces. The creep strain after 100 hours was measured to evaluate the creep properties. Table II shows the results.

Furthermore, the 0.2% proof stress, the tensile strength, and the elongation of each wire were measured. Table II also shows the results. Note that the values were determined from the measurement at room temperature.

[Table II] B: inventive; A, C, D: reference

| Wire | Composition | Creep strain (%) | 0.2% Proof stress (MPa) | Tensile strength (MPa) | Elongation (%) |
|---|---|---|---|---|---|
| $W_A$ | A | 0.02 | 286 | 320 | 7 |
| $W_B$ | B | 0.02 | 255 | 322 | 7 |
| $W_C$ | C | 0.02 | 302 | 343 | 3 |

(continued)

| Wire | Composition | Creep strain (%) | 0.2% Proof stress (MPa) | Tensile strength (MPa) | Elongation (%) |
|---|---|---|---|---|---|
| $W_D$ | D | Broken at 10 hr | 200 | 270 | 8 |

Magnesium-alloy wire $W_A$ having composition A and magnesium-alloy wire $W_B$ having composition B each have a creep strain of 1.0% or less, which indicates excellent heat resistance (creep properties). Furthermore, they each have a 0.2% proof stress of 220 MPa or more and a tensile strength of 260 MPa or more, which indicates excellent strength. Moreover, they each have an elongation of 4% or more, which indicates excellent plastic formability. In contrast, magnesium-alloy wire $W_C$ having composition C has excellent heat resistance and strength but has low elongation. Thus, the wire has poor plastic formability and is not easily processed into a secondary product. Magnesium-alloy wire having composition D was broken at 10 hours in the creep test, which indicates extremely poor heat resistance and low strength.

[Production of Bolt]

Each of the resulting magnesium-alloy wires was cut into pieces each having predetermined dimensions. Each of the pieces was subjected to forge processing to form a bolt head and then thread rolling to form a thread, thereby producing a bolt corresponding to M10. Here, the temperature of the forge processing was 350°C. The temperature of the thread rolling was 190°C.

[Production of Nut]

Each of the resulting magnesium-alloy wires was cut into pieces each having predetermined dimensions. Each of the pieces was subjected to cold heading to be formed into a hexagonal shape while a hole is being formed. Then a thread was cut in the hole. Thereby, nuts having the same compositions as those of the magnesium-alloy bolts were produced. Here, the temperature of the cold heading was 350°C. The temperature of the cutting of the thread was performed at room temperature.

[Characterization of Bolt]

For the resulting magnesium-alloy bolts having the compositions, an axial force relaxation test was performed to evaluate the axial force relaxation properties of the bolts. However, a bolt produced from the magnesium-alloy wire having composition C was not subjected to the axial force relaxation test because a crack was observed in appearance.

The axial force relaxation test was performed as follows: A magnesium-alloy sheet having a bolt hole is prepared. A bolt is inserted into the bolt hole and tightened by a nut (having the same composition as the bolt). Here, the elongation of the bolt was measured with an ultrasonic axial bolt force meter (BOLT-MAX II, manufactured by TMI DAKOTA Co., Ltd.) before and after the tightening. The initial axial force is calculated from the change in bolt length and Young's modulus. In this case, the clamping force of the bolt is set to 50% of the 0.2% proof stress in the form of the wire before the production of the bolt. The Young's modulus was determined from a tensile test of the wire. Next, the sheet is held at 150°C for 24 hours with the bolt tightened, and is cooled to room temperature. Then the bolt is removed. Here, the elongation of the bolt was measured with the ultrasonic axial bolt force meter before and after the removal. The residual axial force is calculated from the change in bolt length and the Young's modulus.

On the basis of the initial axial force and the residual axial force determined from the axial force relaxation test, the axial force relaxation rate of each bolt was determined from an expression described below to evaluate the axial force relaxation properties.

Table III shows the results. Note that a bolt having a lower axial force relaxation rate has better axial force relaxation properties and is advantageous.

Axial force relaxation rate = (initial axial force - residual axial force)/initial axial force

[Table III] B: inventive; A, C, D: reference

| Bolt | Composition | Initial axial force (MPa) | Residual axial force (MPa) | Axial force relaxation rate (%) |
|---|---|---|---|---|
| $B_A$ | A | 90 | 83 | 8 |
| $B_B$ | B | 90 | 81 | 10 |
| $B_C$ | C | - | - | unmeasurable |
| $B_D$ | D | 90 | 6 | 93 |

Magnesium-alloy Bolts $B_A$ having composition A and magnesium-alloy bolt $B_B$ having composition B each have a low axial force relaxation rate, which indicates excellent axial force relaxation properties. So, even if they are used in a high-temperature environment, they each have a stable axial force without reducing the axial force, which is less liable to cause loosening. In contrast, magnesium-alloy bolt $B_D$ with composition D has an axial force relaxation rate of 90% or more. If the bolt is used in a high-temperature environment, the axial force can be reduced to cause loosening. Thus, the bolt does not sufficiently withstand use in a high-temperature environment. In this case, the axial force relaxation rate is preferably 50% or less, more preferably 30% or less, and particularly preferably 20% or less.

(Example 2)

A magnesium-alloy wire having composition B shown in Table I was produced as in Example 1. The wire was processed into to four magnesium-alloy bolts corresponding to M10. For the four magnesium-alloy bolts, with the exception of one bolt, a corrosion protection coating was formed on a surface of each bolt.

[Coating]

The bolts were subjected to surface treatment by shot blasting as pretreatment before the formation of the coatings. The shot blasting was performed for 2 to 3 minutes with steel shots, serving as a blasting material, each having a particle size of 38 to 75 $\mu$m. After the surface treatment, a coating agent (DELTA-PROTEKT (registered trademark) VH300, manufactured by Doerken Corp.) was applied to a surface of each bolt. After the application, in order to cure the coating agent on the surfaces of the bolts, the bolts were placed in an induction furnace and subjected to heat treatment. The heat treatment was performed for 5 to 10 seconds at a heat-treatment temperature of 200°C. The thicknesses of the coatings on the magnesium-alloy bolts were set to 2 $\mu$m, 18 $\mu$m, and 25 $\mu$m.

[Evaluation of Coating]

For the uncoated magnesium-alloy bolt and the coated magnesium-alloy bolts, a salt spray test comply with ISO 9227:1990 (corresponding to JIS Z 2371:2000) was performed to evaluate corrosion resistance. The salt spray test was performed for 2000 hours. The time that elapses before tarnishing was visually detected (time of onset of tarnishing) was measured to evaluate the corrosion resistance. Table 4 shows the results.
Nuts for the bolts corresponding to M10 were prepared. Whether each of the bolts can be tightened by the nut or not (availability of bolt tightening) was checked. Table 4 also shows the results.

[Table 4]

| Thickness of coating ($\mu$m) | Time of onset of tarnishing (hours) | Availability of bolt tightening (○: available, ×: unavailable) |
|---|---|---|
| 0 (uncoated) | 200 | ○ |
| 2 | 2000 or more | ○ |
| 18 | 2000 or more | ○ |
| 25 | 2000 or more | × |

The results shown in Table 4 demonstrate that the coated bolts are not tarnished for 2000 hours or more in a salt-water corrosive environment and thus have excellent corrosion resistance, as compared with the uncoated bolt (the thickness of the coating is zero). However, the bolt covered with the coating having a thickness of 25 $\mu$m was not able to be tightened by the nut. The reason for this is presumably that an increase in the thickness of the coating increased the dimension (outer diameter) of the bolt, thus failing to attach the bolt to the nut.

The linear object (wire) comprising magnesium-alloy according to the present invention and the bolt and the nut produced from the linear object comprising magnesium-alloy have been described above. The linear object comprising magnesium-alloy according to the present invention has not only excellent heat resistance but also excellent plastic formability. It is thus obvious that the linear object comprising magnesium-alloy according to the present invention can be suitably used as a material for washers and other components in addition to the bolt and the nut.

The present invention is not limited to the foregoing examples. Changes can be appropriately made without departing from the scope of the present invention. For example, the proportions of Y and other elements may be changed.

Industrial Applicability

A linear object comprising magnesium-alloy according to the present invention has not only excellent heat resistance but also excellent plastic formability, and thus can be subjected to plastic working to form a secondary product. For example, the linear object comprising magnesium-alloy can be suitably used as a material for fastening components, such as bolts, nuts, and washers.

**Claims**

1. A linear object comprising magnesium-alloy comprising:

   on a mass percent basis,
   5.2% Y;
   0.1% Zn;
   0.4% Zr;
   1.7% Nd; and
   the balance being Mg and incidental impurities,
   wherein the linear object comprising magnesium-alloy has a creep strain of 1.0% or less,
   the creep strain being determined by a creep test at a temperature of 150°C and a stress of 75 MPa for 100 hours.

2. The linear object comprising magnesium-alloy according to Claim 1, wherein the linear object comprising magnesium-alloy has a 0.2% proof stress of 200 MPa or more and a tensile strength of 260 MPa or more.

3. The linear object comprising magnesium-alloy according to Claim 1 or Claim 2, wherein the linear object comprising magnesium-alloy has an elongation of 4% or more.

4. A bolt produced by subjecting the linear object comprising magnesium-alloy according to any one of Claims 1 to 3 to plastic working.

5. A nut produced by subjecting the linear object comprising magnesium-alloy according to any one of Claims 1 to 3 to plastic working.

6. A washer produced by subjecting the linear object comprising magnesium-alloy according to any one of Claims 1 to 3 to plastic working.

7. The bolt according to Claim 4, further comprising a corrosion protection coating arranged on a surface of the bolt.

8. The nut according to Claim 5, further comprising a corrosion protection coating arranged on a surface of the nut.

9. The washer according to Claim 6, further comprising a corrosion protection coating arranged on a surface of the washer.

**Patentansprüche**

1. Linearer Gegenstand, umfassend Magnesiumlegierung, umfassend:

   auf einer Massenprozentbasis,

5,2 % Y;

0,1 % Zn;

0,4 % Zr;

1,7 % Nd; und

wobei der Rest Mg und unvermeidbare Verunreinigungen ist,

wobei der lineare Gegenstand, umfassend Magnesiumlegierung, eine Kriechdehnung von 1,0 % oder weniger aufweist,

wobei die Kriechdehnung durch einen Kriechtest bei einer Temperatur von 150 °C und einer Spannung von 75 MPa für 100 Stunden bestimmt wird

2. Linearer Gegenstand, umfassend Magnesiumlegierung, nach Anspruch 1, wobei der lineare Gegenstand, umfassend Magnesiumlegierung, eine 0,2 % Dehnungsgrenze von 200 MPa oder mehr und eine Zugfestigkeit von 260 MPa oder mehr aufweist.

3. Linearer Gegenstand, umfassend Magnesiumlegierung, nach Anspruch 1 oder Anspruch 2, wobei der lineare Gegenstand, umfassen Magnesiumlegierung, eine Dehnung von 4 % oder mehr aufweist.

4. Bolzen, hergestellt durch plastisches Bearbeiten des linearen Gegenstandes, umfassen Magnesiumlegierung, nach einem der Ansprüche 1 bis 3.

5. Mutter, hergestellt durch plastisches Bearbeiten des linearen Gegenstandes, umfassend Magnesiumlegierung, nach einem der Ansprüche 1 bis 3.

6. Scheibe, hergestellt durch plastisches Bearbeiten des linearen Gegenstandes, umfassend Magnesiumlegierung, nach einem der Ansprüche 1 bis 3.

7. Bolzen nach Anspruch 4, des Weiteren umfassend eine Korrosionsschutzbeschichtung, angeordnet auf einer Oberfläche des Bolzens.

8. Mutter nach Anspruch 5, des Weiteren umfassend eine Korrosionsschutzbeschichtung, angeordnet auf einer Oberfläche der Mutter.

9. Scheibe nach Anspruch 6, des Weiteren umfassend eine Korrosionsschutzbeschichtung, angeordnet auf eine Oberfläche der Scheibe.

## Revendications

1. Objet linéaire comprenant un alliage de magnésium comprenant :

sur une base de pourcentages en masse,

5,2 % de Y ;

0,1 % de Zn ;

0,4 % de Zr ;

1,7 % de Nd ; et

le reste étant du Mg et des impuretés accidentelles,

lequel objet linéaire comprenant un alliage de magnésium a une déformation de fluage de 1,0 % ou moins,

la déformation de fluage étant déterminée par un test de fluage à une température de 150°C et sous une contrainte de 75 MPa pendant 100 heures.

2. Objet linéaire comprenant un alliage de magnésium selon la revendication 1, lequel objet linéaire comprenant un alliage de magnésium a une limite conventionnelle d'élasticité à 0,2 % de 200 MPa ou plus et une résistance à la traction de 260 MPa ou plus.

3. Objet linéaire comprenant un alliage de magnésium selon la revendication 1 ou la revendication 2, lequel objet linéaire comprenant un alliage de magnésium a un allongement de 4 % ou plus.

4. Boulon produit par soumission de l'objet linéaire comprenant un alliage de magnésium de l'une quelconque des revendications 1 à 3 à un usinage plastique.

5. Ecrou produit par soumission de l'objet linéaire comprenant un alliage de magnésium de l'une quelconque des revendications 1 à 3 à un usinage plastique.

6. Rondelle produite par soumission de l'objet linéaire comprenant un alliage de magnésium de l'une quelconque des revendications 1 à 3 à un usinage plastique.

7. Boulon selon la revendication 4, comprenant en outre un revêtement anticorrosion disposé sur une surface du boulon.

8. Ecrou selon la revendication 5, comprenant en outre un revêtement anticorrosion disposé sur une surface de l'écrou.

9. Rondelle selon la revendication 6, comprenant en outre un revêtement anticorrosion disposé sur une surface de la rondelle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005048278 A
- JP 2001503478 PCT
- US 20090081313 A1
- GB 2095288 A
- US 4401621 A